# EUROPÄISCHE PATENTANMELDUNG

(11) **EP 2 796 052 A1**
(43) Veröffentlichungstag der Anmeldung: **29.10.2014**
(21) Anmeldenummer: 14165167.9
(22) Anmeldetag: 17.04.2014
(51) Int. Cl.: A23C 19/08, A23C 19/09

(54) **Verfahren zur Herstellung eines streichfähigen oder schnittfesten Käses und von festen bis flüssigen, strukturmodifizierten Käseprodukten auf Basis eines herkömmlichen festen und/oder weichen Käses**

(30) Priorität: 26.04.2013 DE 102013104289
(71) Anmelder: Verein zur Förderung des Technologietransfers an der Hochschule Bremerhaven e.V., 27568 Bremerhaven (DE)
(72) Erfinder: Ringer, Linda, 27568 Bremerhaven (DE); Hajek, Beate, 27568 Bremerhaven (DE)
(74) Vertreter: Meinke, Dabringhaus und Partner GbR

(57) **Zusammenfassung**

Die Erfindung betrifft ein Verfahren zur Herstellung eines streichfähigen oder schnittfesten und von festen bis flüssigen, strukturmodifizierten Käseprodukten auf Basis herkömmlichen festen und/oder weichen Käses. Der Käse soll frei von Zusatzstoffen, insbesondere Schmelzsalzen und weiteren Zusatzstoffen sein und ein hohes Maß an Eigengeschmack behalten.

Hierzu wird fester und/oder weicher Käse zerkleinert und mit einer wässrigen Komponente vermischt, in ein druckflexibles Behältnis, beispielsweise einen Kunststoffbeutel oder einer Einschweißfolie, ohne Gaseinschlüsse eingefüllt, wasserdicht verschlossen sowie auf eine Temperatur von ca. 1 C° bis 80 C° gebracht und einer von außen auf das Behältnis einwirkenden Hochdruckbehandlung unterzogen, anschließend auf Umgebungsdruck entspannt und die Wasser-Käsemischung entnommen.

## Beschreibung

Die Erfindung betrifft ein Verfahren zur Herstellung eines streichfähigen oder schnittfesten Käses und von festen bis flüssigen, strukturmodifizierten Käseprodukten auf Basis herkömmlichen festen und/oder weichen Käses.

Herkömmlich wird Schmelzkäse aus zerkleinerten Schnitt- und Hartkäsen zunächst durch Erhitzen auf eine Temperatur zwischen 75° C - 95° C unter Zugabe von 2 - 3 % Schmelzsalzen (Laktate, Zitrate, Phosphate) in streichfähiger oder schnittfester Form hergestellt. Teilweise werden weitere Zusätze hinzugegeben, wie Milchpulver, Rahm, Aromen, Gewürze, Gemüse, Fleischprodukte. Die Haltbarkeit ist aufgrund der thermischen Ausschaltung der Mikroorganismen in der Regel gut. Die Erhitzung erfolgt bei chargenweisem Ansatz in doppelwandigen Druckkesseln mit Rührwerk durch Dampfinjektion, meist unter Anlegen von leichtem Vakuum. Daneben sind auch kontinuierliche Verfahren in doppelwandigen Zylindern mit Rührwellen bekannt (Belitz H.-D., Grosch, W. und Schieberle, P.: Lehrbuch der Lebensmittelchemie, 5. Auflage, Springer-Verlag 2001, S. 526).

Zum Pasteurisieren von Molkereiprodukten, insbesondere zusammengesetzten Produkten, die aus einer Kombination aus einem Frischkäse bzw. Rahmkäse und einem Blauschimmelkäse bestehen, ist aus der EP 1 401 287 B1 ein Verfahren bekannt, in welchem das Molkereiprodukt in Folien oder Schalen aus einem durch Wärme schrumpfbaren Material vakuumverpackt ist und in die fluidgefüllte Kompressionskammer einer Maschine für eine Behandlung unter hohem hydrostatischen Druck bei anschließenden Verschließen der Kompressionskammer eingebracht wird. Sodann wird der Druck in der Kompressionskammer für einen Zeitraum von 2 bis 4 Minuten bis zu einem Bereich von 400 MPa (4.000 bar) bis 600 MPa (6.000 bar) erhöht und für einen Zeitraum von weiteren ca. 2 bis 4 Minuten bei einer Temperatur von ungefähr 4 °C gehalten, bevor die Kammer auf Atmosphärendruck dekomprimiert, geöffnet und das Molkereiprodukt entnommen wird. Die Folien oder Schalen können aus Polyethylen, Polyethylenterephthalat und Polystyrol, allein oder in mehrschichtigen Kombinationen, möglicherweise umfassend eine Aluminiumfolie bzw. ein Aluminiumblech, bestehen. Das Material kann auch ein coextrudiertes, mehrschichtiges, durch Wärme schrumpfbares Polyolefin sein.

Die EP 2 437 614 A1 schlägt einen kalziumverstärkten verarbeiteten Käse ohne Emulgatorsalze sowie ein dazu geeignetes Herstellungsverfahren vor. Dazu soll eine Komposition von Molkeflüssigkeiten oder vorgelierten Molkekomposition oder aus beidem umfassend Kasein, wobei mindestens ein Teil davon einen Anteil von divalanten Ionen desselben aufweist, einschließlich Kalziumionen, die durch Sodium oder Pottasiumionen ersetzt sind, aufgekocht und anschließend abgekühlt werden, um einen prozessierten Käse zu erhalten, wobei eine im Wesentlichen unlösbare Kalziumquelle allerdings mit einer der Kompositionen zu einem Zeitpunkt vermischt wird, bevor der Käse abgekühlt wird.

Auch die EP 2 027 776 A1 beschreibt einen Schmelzkäse ohne emulgierende Salze. Stattdessen weist der Käse oder eine Mischung aus natürlichen Käsen zusätzlich eine kalziumreduzierte Kaseinquelle auf, wobei diese einen Anteil von 0,8 bis 25 v.H. des Endproduktes betragen kann. Die Rohstoffe werden so lange miteinander vermischt und durch Einleitung von Dampf erhitzt, bis eine homogene Masse entsteht.

In der EP 1 565 059 A1 werden ein Molkereiprodukt und ein Molkereiverfahren in Zusammenhang mit einer Hochdruckbehandlung beschrieben. Hierin wird vorgeschlagen, einen Käse einer Hochdruckbehandlung von mehr als 400 MPa zu unterziehen, um den Zusammenfall intakten Kaseins in einem Käse aufzuhalten oder zu verhindern.

Die EP 1 550 374 A1 beschreibt Schmelzkäseprodukte und Verfahren zur Herstellung von Schmelzkäse unter Verwendung von Potassiumsalz.

Die weitere EP 1 441 596 A1 beschreibt einen Schmelzkäse und dessen Zubereitung durch Vermischen von festem Käse und/oder Casein oder Caseinaten, Wasser, Additiven, sowie wahlweise Butter und/oder Butterfett unter Beimischung von vernetzten Caseinaten, als einem Strukturmittel.

Die EP 1 746 900 A1 schlägt einen frischen Käse mit plastischer homogenisierter Textur sowie ein Verfahren und ein Gerät für seine Herstellung vor. Das Verfahren zur Gerinnung eines sauer geronnenen fermentierte Frischkäse mit einer extrudierbaren und homogenen Textur umfasst das Schneiden, Erhitzen, Unter-Druck-Setzen und Rütteln, um mit noch weiteren Verfahrensschritten eine im Wesentlichen homogene Textur zu erzielen.

Die Dissertation von Eva Merel-Rausch an der Universität Hohenheim, Fakultät Naturwissenschaften aus dem Jahr 2006 mit dem Titel "Hydrostatic high pressure treatment of casein to generate defined particle and gel structures" befasst sich mit Verfahren der Ultrahochdruckbehandlung und kommt zu dem Ergebnis, dass diese neben der Inaktivierung von Mikroorganismen auch zur Modifikation von Proteinen eingesetzt werden können, da diese aufgrund ihres molekularen Aufbaus, ihrer Konformität und ihrer quartären Struktur unterschiedlich auf Druck und Temperatur reagieren, so dass sich hier durch die funktionellen Eigenschaften beeinflussen lassen. Die Arbeit kommt zu dem Ergebnis, dass Strukturen wie Caseine maßgeblich durch die Druckentspannungsphase beeinflusst werden. Es lassen sich Strukturen von Sol bis hin zu festen Gelen ausbilden, wobei die erzeugten Strukturen umso fester sind, je höher die Entspannungsrate gewählt wird. Von zusätzlicher Bedeutung sind die jeweiligen Milieubedingungen.

M. Heinrich und U. Kulozik beschreiben in der Zeitschrift "Ernährung/Nutrition", Volume 33, 12-2009, S. 505 - 515 unter dem Titel "Hochdruckbehandlung von Lebensmitteln - Auswirkungen auf Milch und ihre Inhaltsstoffe", dass die Behandlung mit isostatischem Hochdruck auch bei der Käseherstellung vielfältige Vorteile bietet, die näher beschrieben werden. So werden bei hydrostatischen Drücken zwischen 1.000 und 10.000 bar bei niedrigen Temperaturen durch eine Volumenreduktion im System Proteine denaturiert und vegetative Mikroorganismen inaktiviert, ohne dass die bei einer thermischen Behandlung mitunter auftretenden unerwünschten Folgereaktion, die zu einer Verminderung des Nährwerts, der Bildung von Fehlaromen sowie eine Beeinträchtigung der Lebensmittelqualität führen können, auftreten. Vielmehr zeichnen sich hochdruckbehandelte Produkte meist durch einen frischen Geschmack und eine annähernd unveränderte Farbe trotz erfolgter Pasteurisation aus. Bei den Proteinen kann durch die Hochdruckbehandlung eine partielle oder vollständige Denaturierung erreicht werden, was auch zur Erzeugung neuer Texturen im Lebensmittel genutzt werden kann. Im Einzelnen wird die druckbedingte Denaturierung eines Modellproteins dahingehend beschrieben, dass jedes Protein in seinem Inneren wasserfreie Kapazitäten, sogenannte void volumes aufweist, wobei außerdem die einzelnen Seitenketten seines Polypeptidrückgrats unterschiedlich geladen sind. Sie interagieren über verschiedene Bindungen, zum Beispiel Ionenbindungen, Salzbrücken, hydrophobe Wechselwirkungen, Wasserstoffbrücken und so weiter. Dies bestimmt letztlich die native Struktur des Proteins. Im Druckbereich bis 200 MPa (2.000 bar) findet zunächst eine Ionisierung der Seitenketten statt. Salzbrücken, ionische und hydrophobe Wechselwirkungen werden aufgrund ihres Reaktionsvolumens aufgebrochen. Die native Struktur wird aufgelockert. Dadurch kann Wasser tiefer in das Protein eindringen. Wird der Druck weiter erhöht, wird das Wasser in die Hohlräume innerhalb des Proteins gepresst. Der zunächst hydrophobe Kern des Proteins schwillt aufgrund des eingepressten Wassers an. Im Druckbereich zwischen 500 und 1.000 MPa (5.000 und 10.000 bar) bricht die Tertiärstruktur des Proteins zusammen: Der sogenannte molten globule state, eine ungeordnete Proteinstruktur, wird erreicht, bei dem das Protein keine void volumes mehr aufweist. Vor allem Caseine und Molkenproteine sind maßgeblich an der strukturellen Veränderung der Milch als Folge der Hochdruckbehandlung beteiligt. Eng mit der strukturellen Integrität des Caseins verknüpft sind die mineralischen Komponenten, in erster Linie Kalzium und Phosphat.

Weiter ist aus der US 2005/0112252 A1 ein Verfahren bekannt, bei dem ein Blauschimmelkäsedressing mit Hochdruck behandelt wird. Es handelt sich um ein hochdruckbasiertes Verfahren zur Inaktivierung von Mikroorganismen von Dressings, insbesondere mit den Geschmacksrichtungen Blauschimmelkäse und Mexikan Salsa. Der Anteil von Blauschimmelkäse bei derartigen Dressings liegt bei lediglich 4 % der Gesamtrezeptur. Ein solches Produkt ist kein Käseprodukt.

Aufgabe der Erfindung ist es, einen festen bis flüssigen, strukturmodifizierten und streichfähigen oder schnittfesten Käse herzustellen, der frei von den genannten Zusatzstoffen, insbesondere Schmelzsalzen und weiteren Zusatzstoffen ist. Der Streichkäse soll dabei ein hohes Maß an Eigengeschmack behalten und als Clean-Label deklariert werden können.

Zur Lösung des Problems schlägt die Erfindung vor, dass fester und/oder weicher Käse zerkleinert und mit einer wässrigen Komponente vermischt, in ein druckflexibles Behältnis, beispielsweise einen Kunststoffbeutel oder eine Einschweißfolie, ohne Gaseinschlüsse eingefüllt, dieser wasserdicht verschlossen sowie auf eine Temperatur von ca. 1 °C bis 80 °C gebracht und einer von außen auf das Behältnis einwirkenden Hochdruckbehandlung unterzogen, anschließend auf Umgebungsdruck entspannt und die Wasser-Käse-Mischung entnommen wird.

Vorzugweise wird die Mischung einer hydrostatischen Behandlung unterzogen. Zur Druckbehandlung in sogenannten "Wet-Bag"-Verfahren werden feste Lebensmittel flexibel und wasserdicht verpackt, z.B. in Einschweißfolien. Dazu bringt man flexibel verpackte Lebensmittel ohne Gaseinschlüsse in einen mit Flüssigkeit - die als Medium zur Druckübertragung dient - gefüllten Zylinder und erhöht den Druck mit einem dicht abschließenden Kolben in einem Druckübersetzer, so dass auch bei flüssigen Lebensmitteln der Druck übertragen werden kann. Bei der Hochdruckbehandlung werden Lebensmittel einem Druck zwischen 100 - 1.000 MPa (1.000 - 10.000 bar) ausgesetzt. Als Druckübertragungsmedium werden Flüssigkeiten verwendet, die mit den Materialien der Hochdruckanlagen und der Verpackung des Käses kompatibel sind. Dabei sollte das Druckübertragungsmedium eine möglichst geringe Kompressibilität besitzen, damit sich der Druck schnell aufbauen kann. Aus diesem Grunde wird eine hydrostatische Behandlung mit Wasser als Druckmedium vorgeschlagen.

Mit der Kompression geht eine Erwärmung einher, die Temperatur erhöht sich um ca. 25° C. Bei Bedarf lässt sich die Druckkammer über einen Wärmeaustauscher temperieren. Nach Ablauf der Einwirkzeit wird wieder auf Umgebungsdruck entspannt und das Wasser-Käse-Gemisch entnommen ("Batch"-Verfahren). Ebenso kann auch ein kontinuierliches Verfahren ("Conti"-Verfahren) verwirklicht werden.

Vorteilhaft wird der Käse in kleine Stifte geraspelt. Raspeln ist besonders vorteilhaft, da hierdurch das dreidimensionale Proteinnetzwerk zerkleinert bzw. zerstört und die Oberfläche aufgerauht wird. Dies ist besser geeignet, als nur gerade Schnittkanten durch Schneiden zu erzeugen. Geschnittene Käsestücke führen zu einer stückigen, nicht glatten, sondern grieseligen Käse-Wasser-Masse mit Fettaustritt. Auch zu warmer Käse führt zu einer ungünstigen Fettverteilung, wie auch zu einem Verschmieren der Käsereibe. Es ist daher günstig, die Zerkleinerung des Käses bei einer Temperatur zwischen 0 °C - 20 °C vorzunehmen. Das Vermischen der zerkleinerten Käsestücke mit Wasser geschieht dadurch, dass jedes einzelne Käsestückchen mit Wasser ummantelt bzw. benetzt wird. Vorteilhaft ist es, wenn die Raspel eine Länge von 5 bis 50 mm, eine Breite von 3 bis 5 mm und eine Dicke von 1 bis 3 mm und/oder feiner aufweisen.

Es findet demnach eine Verkleinerung des dreidimensionalen Käse-Proteinnetzwerk statt. Das Wasser, das beim Dicklegen der Milch und dem anschließenden Zerkleinern und Pressen und Reifen des Käsebruchs verloren geht, wird in diesem Prozess zum Teil wieder zurückgeführt.

Die Hochdruckbehandlung bewirkt ein In-Lösung-Gehen von Kalziumphosphatbrücken, was dazu führt, dass Kaseinmizellen in Submizellen aufbrechen, so lange der Druck anhält. Dabei vereinzeln sich auch vermehrt Submizellen. Findet eine Druckentspannung statt, bildet das Kalziumphosphat zwischen den Submizellen und auf verbliebenen Kaseinmizellen neue Bindungen aus. Es bildet sich erneut ein dreidimensionales Netzwerk aus. Aufgrund der vergrößerten Oberfläche der Proteine entstehen neue Bindungsmöglichkeiten für Wasser. Es bilden sich Hydrathüllen, die für eine vermehrte Wasserbindung verantwortlich sind.

Das Homogenisieren bewirkt, dass zum Teil vereinzelt vorliegende Käsestücke zerkleinert werden und eine geschmeidige Käse-Wasser-Emulsion entsteht. Die Fließgrenze der Käse-Matrix wird durch hydrostatischen Hochdruck herabgesetzt. Die Käsestruktur wird irreversibel zerstört und führt zu einem Fließen der Mischung. Das Fließen muss nicht direkt nach der Hochdruckbehandlung einsetzen. Eine zwischenzeitliche Lagerung kann zur gewünschten Strukturmodifizierung beitragen. Dabei ist eine Mindestlagerzeit von 96 Stunden vorteilhaft.

Die vorgesehene Kühlung bewirkt je nach Wassergehalt eine Verfestigung des dreidimensionalen Netzwerks. Dies bedeutet, dass ein Käsegel entsteht.

Der angegebene Homogenisierungsschritt ist notwendig, da auch nach der Hochdruckbehandlung vereinzelt Käsestückchen in der Mischung verbleiben können. Diese gilt es in die Käse-Wasser-Masse einzuarbeiten, um eine geschmeidige Käsemasse zu erhalten. Zudem unterstützt der mechanische Energieeintrag die durch Hochdruck induzierte Strukturmodifizierung.

Die vorgeschlagene Lagertemperaturen und auch die Lagerzeit sind wesentlich, da das Kühlen bei 4 °C das Ausbilden eines dreidimensionalen Proteinnetzwerk unterstützt. Abhängig vom Wassergehalt in der Käse-Wasser-Mischung können so unterschiedliche Konsistenzen von flüssig bis gelartig generiert werden.

Eine Lagerzeit von mindestens 96 Stunden ist notwendig, um unter anderem auch kleine verbliebene Käsestückchen vollständig zu hydratisieren. Diese Lagerung kann somit als Reifeprozess angesehen werden.

Weiterhin wird durch die Hochdruckbehandlung die Fließgrenze der Käse-Matrix herabgesetzt und die Käsestruktur aufgelöst. Der Käse beginnt zu fließen. Dies kann einige Tage dauern. Deshalb ist eine Einlagerung von 96 Stunden nötig, um die gewünschte Strukturmodifizierung zu erreichen.

Bei dem erfindungsgemäßen Verfahren zur Herstellung eines strukturmodifizierten Käses wird zum gereiften und zerkleinerten Käse Wasser hinzugegeben. Die Käsestückchen lösen sich dabei unter Hochdruck auf und es entsteht ein strukturmodifizierter, verflüssigter und viskoser Käse. Ungereiftes Kasein kann hingegen während einer Hochdruckbehandlung nur bedingt zusätzliches Wasser aufnehmen. Der Reifegrad (Proteolyse, Lipolyse) eines Käses hängt mit der Viskosität nach dem Hochdruckprozess zusammen. Je weiter er fortgeschritten ist, desto weniger viskos ist der Käse. Ebenso gilt dies für den Kalziumgehalteinfluss. Je höher er ist, desto weniger ist das Produkt verflüssigbar. Ein Zusatz von CaCl₂ zur Käsewassermasse stabilisiert Käsestückchen, die durch Hochdruck weniger verflüssigt werden können. Die Gelstabilität wird durch Hochdruckbehandlung und Kühlung erhöht.

In dem erfindungsgemäßen Verfahren wird gereifter Käse als Ausgangsprodukt genutzt. Abbauprozesse, die während der Reifung des Käses abgelaufen sind, sind unter anderem proteolytisch. Das bedeutet unter anderem, dass hydrophobe Proteine zur hydrophilen Fragmenten abgebaut werden und positiv zur Strukturmodifizierung beitragen. Nach dem erfindungsgemäßen Verfahren können die Käsestückchen, also das grob zerkleinerte Proteinnetzwerk, in zusätzlich zugegebenen Wasser durch hydrostatischen Hochdruck In-Lösung-Gehen, und zwar ohne jede Phasentrennung und ohne chemische Zusätze.

Die Mischung wird vorteilhaft nach der Hochdruckbehandlung homogenisiert und anschließend gekühlt und gelagert.

Als Ausgangskäse kann jeder gereifte und/oder weiche Käse, insbesondere junger, mittelalter oder alter Gouda, Butterkäse, Emmentaler, Edamer, Leerdamer, Tilsiter, Bergkäse, Chester (Cheddar), Milster Marschkäse, Steinbuscher Edelpilzkäse, Weisslacker, Camembert, Brie, Romadur, Limburger, Minsterkäse, Speisequark, Schichtkäse, Rahmfrischkäse und Doppelrahmfrischkäse, Harzer Käse, Mainzer Käse, Handkäse, Bauernhandkäse, Korbkäse, Stangenkäse, Spitzkäse, Eulmitzer Quargel, sowie Parmesan, Prevotta und dergleichen verwendet werden.

Als wässerige Komponente bzw. Emulsionen finden insbesondere entmineralisiertes und deminaralisiertes Wasser, Trinkwasser, Saft, Obstsaft oder Gemüsesaft, Wein, Bier, Molke, Sahne und dergleichen Verwendung.

Wie bei Lebensmitteln üblich, erfolgt die Druckbehandlung im CIP-Verfahren (cold isostatic pressing), das normalerweise bei Raumtemperaturen oder Temperaturen < 100° C mit Drücken von bis zu 600 MPa (6.000 bar) abläuft.

Die Mischung wird vorteilhaft einer Hochdruckbehandlung von 0,1 MPa (1 bar) bis zu 390 MPa (3.900 bar) unterzogen, und zwar für eine Zeit von 1 Sekunde bis zu 24 Stunden bei einer Temperatur von 1° C - 80° C. Die Lagertemperatur sollte anschließend zwischen 1° C und 20° C betragen, die Lagerdauer 30 Minuten - 1 Jahr, vorzugsweise 96 Stunden.

Der Mischung können vor und/oder nach der Hochdruckbehandlung trockene Stoffe wie Gewürze, Kräuter, Molkenpulver zugesetzt werden.

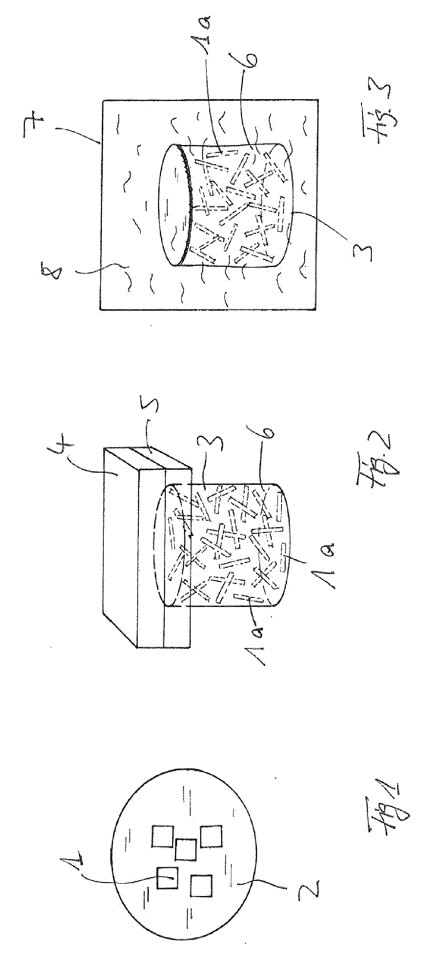

Die Erfindung ist nachstehend anhand der Zeichnungen beispielhaft näher erläutert. Diese zeigen in
- Fig. 1: eine Zerkleinerungsvorrichtung mit Ausgangskäse
- Fig. 2: einen Kunststoffbeutel mit Käseraspeln, einer Vakumier- und Verschweißeinrichtung
- Fig. 3: eine Hochdruckanlage

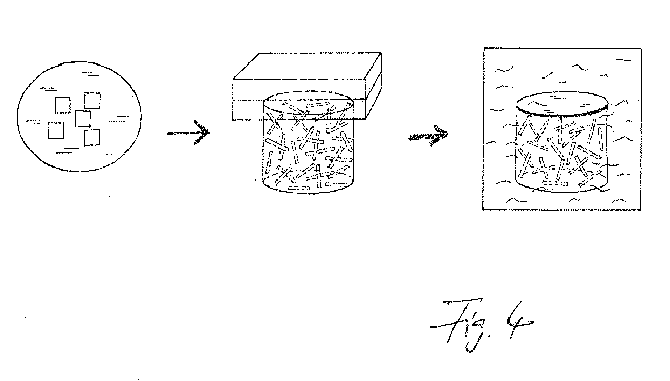

- Fig. 4: ein Ablaufdiagramm

Der Ausgangskäse, nämlich ein gereifter oder weicher Käse 1 wird zunächst in einer dafür geeigneten Einrichtung 2 zerkleinert, insbesondere auf einer Reibe oder ähnlichem geraspelt, beispielsweise in Stücke 1a mit einer Länge von 5 mm bis 50 mm, einer Breite von 3 mm bis 5 mm und einer Dicke von 1 mm bis 3 mm und/oder feiner und anschließend in ein druckflexibles Behältnis, beispielsweise einen Kunststoffbeutel 3 oder eine Einschweißfolie, eingefüllt. Die eingetragene Umgebungsluft wird aus dem Kunststoffbeutel 3 durch eine geeignete Vakumiereinrichtung 4 entfernt und der Kunststoffbeutel 3 anschließend durch eine geeignete Verschweißeinrichtung 5 verschlossen. Zuvor wird der zerkleinerte Käse 1 insbesondere die Käseraspel 1a mit einer wässrigen Komponente, deren Volumen-/Gewichtsanteil beispielsweise bis 50 % beträgt, vermischt oder vermengt. Das Käse-Wasser-Gemisch 6 wird temperiert, beispielsweise auf 30° C, und in eine geeignete Hochdruckanlage 7 überführt. Das in dieser Hochdruckanlage 7, die zu einer hydrostatischen Behandlung des Käse-Wasser-Gemisches 6 geeignet ist, enthaltene Prozesswasser 8, das zum Druckaufbau dient, wird ebenfalls temperiert. Nach der Hochdruckbehandlung, die eine Sekunde bis mehrere Stunden dauern und mit Drücken von 1 bar (0,1 MPa) bis zu 3.900 bar (390 MPa) durchgeführt werden kann, wobei die Temperatur der Hochdruckbehandlung 1° C bis 80 ° C betragen kann, wird die Mischung aus der Hochdruckbehandlungseinrichtung 7 entnommen, das entstandene Käse-Wasser-Gemisch 6 in der Einschweißfolie bzw. Kunststoffbeutel 3 homogenisiert und anschließend bei Temperaturen zwischen 1° C und 20° C, vorteilhaft bei 4° C, gelagert. Die Lagerdauer ist abhängig von der Käsesorte und dem Reifegrad des Ausgangskäses und kann 30 Minuten und bis zu einem Jahr betragen. Vorteilhaft sind mindestens 96 Stunden.

Diese Lagerung bewirkt unter anderem ein Auflösen von verbliebenen Käseraspeln 1a. Das Abkühlen, beispielsweise auf 4° C, bewirkt eine Gelierung und somit eine Verfestigung des Streichkäses, wie folgende

Beispiele zeigen:

### Beispiel 1:

### Zutaten :

Emmentaler: 50 %

Wasser: 50 %

### Verfahren:

Hochdruck: 50 MPa

Zeitdauer: 1 Stunde

Prozesstemperatur: 40° C

Der streichfähige Käse, der auf der vorgenannten Rezeptur basiert, besitzt eine Mayonnaise-ähnliche Konsistenz und lässt sich sehr gut streichen. Bei mechanischer Energieeinwirkung, z.B. durch Rühren, lässt sich kein Trennen (Synärese) beobachten.

### Beispiel 2:

### Zutaten :

Mittelalter Goudakäse: 50 %

Wasser: 50 %

### Verfahren:

Hochdruck: 50 MPa

Zeitdauer: 1 Stunde

Prozesstemperatur: 40° C

Der streichfähige Käse nach der vorgenannten Rezeptur besitzt eine weichere Konsistenz, er ist weniger viskos als in Bespiel 1, dennoch weiterhin streichfähig und gut verarbeitbar. Durch mechanische Energieeinwirkung, z.B. Rühren, kann auch hier kein Trennen (Synärese) beobachtet werden.

Die durch den hydrostatischen Druck verursachte Volumenverkleinerung des Käse-Wasser-Gemisches bringt verschiedenste Reaktionspartner enger zusammen. Dies führt zu unterschiedlichen Reaktionen oder auch Enzymaktivierung von z.B. Proteasen, Lipasen und dgl. und damit zum Beispiel zur Hydrolyse (Verflüssigung).

Durch die Druckbehandlung werden die Kaseinmicellen des Käses aufgeschlossen, der hydrophobe Charakter der Proteine nimmt ab. Die Veränderung der Proteine erlaubt es vermehrt Wasser einzulagern und zu emulgieren. Gleichzeitig werden durch die Hochdruckbehandlung die Gelbildungseigenschaften verbessert. Auch das Homogenisieren nach der Hochdruckbehandlung trägt dazu bei.

Während der Lagerzeit unter normalem Umgebungsdruck lösen sich verbleibende Käseraspel bzw. Stifte in der Masse auf. Es entsteht eine streichfähige Käsemasse mit einem vergleichsweise höheren Gehalt an Wasser bezogen auf den als Ausgangsprodukt verwendeten Käse.

Bei einer Lagerung von 4 Wochen zeigt sich z.B., dass die Viskosität des Käse-Wasser-Gemisches weiter abnimmt. Die durch den Hochdruck aktivierten Prozesse sind weiter aktiv. Es handelt sich dabei um eine enzymatisch katalysierte Hydrolyse. Die teilweise beobachtete Ausbildung eines recht bitteren Aromas gibt Hinweise darauf, dass proteolytische Prozesse ebenfalls weiter ablaufen. Wie stark eine Verflüssigung voranschreitet und wie intensiv die Bitternote auftritt, ist abhängig von dem Ausgangskäse. Lagertests haben gezeigt, dass junger Gouda eine festere Emulsion bildet als mittelalter Gouda. Im Übrigen weist der hochdruckbehandelte Streichkäse, also das Käse-Wasser-Gemisch, ein nahezu identisches Aroma zum ursprünglichen Ausgangskäse auf.

Je geringer die Zugabe der wässrigen Komponente ist, umso eher wird das Käse-Wasser-Gemisch wieder zu einer festeren Masse, die wiederum schnittfähig ist und in Scheibenform gebracht werden kann. Da kovalente Bindungen unter Druck erhalten bleiben, sind kleinere Moleküle, zum Beispiel Vitamine und Aromastoffe weniger druckempfindlicher als größere Moleküle, wie Proteine, deren Raumstruktur durch schwächere Bindungsarten charakterisiert ist. Das Verfahren erhält dann im Vergleich zum Erhitzungsverfahren mehr wertvolle Inhaltstoffe wie Vitamine und Aromastoffe. Die Proteinstrukturen hingegen werden je nach Höhe des Drucks reversibel oder irreversibel verändert, dass heißt denaturiert. Einflussfaktoren sind insbesondere der Druck, die Temperatur, die Proteinstruktur, der pH-Wert und die Zusammensetzung des Lösungsmittels. Bei Enzymen kann die Veränderung, d.h. Denaturierung dazu führen, dass Enzymeigenschaften beeinflusst werden. Die Aktivität des Enzyms kann sowohl verringert als auch gesteigert werden.

Die erfindungsgemäße Hochdruckbehandlung ermöglicht es, Proteine gezielt zu modifizieren, so dass beispielsweise durch Strukturänderungen das Bilden von Proteingelen möglich wird, die sehr glatt und elastisch bis plastisch sind. Auch kann das Einwirken von hohem Druck das Verhalten von Fetten beim Schmelzen und Kristallisieren verändern. Unter hohem Druck nimmt auch die Viskosität von Wasser und wässrigen Lösungen zu, der pH-Wert nimmt ab. Salze und Säuren liegen mit zunehmenden Druck vermehrt als Ionen vor. Dies alles begünstigt das angestrebte Ergebnis, einen streichfähigen oder schnittfähigen Käse ohne Zusatz von Schmelzsalzen wie Lactaten, Citraten, Phosphaten herzustellen. Auch andere Zusätze sind nicht mehr notwendig. Es genügt die Anwendung eines rein physikalischen Verfahrens, nämlich das Hochdruckverfahren mit einer anschließenden definierten Reifung unter atmosphärischem Druck.

Natürlich ist die Erfindung nicht auf die dargestellten Ausführungsbeispiele beschränkt. Weitere Ausgestaltungen sind möglich, ohne den Grundgedanken zu verlassen.

## Patentansprüche

1. Verfahren zur Herstellung eines flüssigen, streichfähigen oder schnittfesten Käses,
**dadurch gekennzeichnet,**
**dass** fester und/oder weicher Käse (1) zerkleinert und mit einer wässrigen Komponente (6) vermischt, in ein druckflexibles Behältnis, beispielsweise einen Kunststoffbeutel (3) oder eine Einschweißfolie ohne Gaseinschlüsse eingefüllt, dieser wasserdicht verschlossen sowie auf eine Temperatur von ca. 1 °C bis 80 °C gebracht und einer von außen auf das Behältnis einwirkender Hochdruckbehandlung unterzogen anschließend auf Umgebungsdruck entspannt und die Wasser-Käse-Mischung entnommen wird.

2. Verfahren nach Anspruch 1,
**dadurch gekennzeichnet,**
**dass** die Wasser-Käse Mischung (1,6) einer hydrostatischen Behandlung unterzogen wird.

3. Verfahren nach Anspruch 1,
**dadurch gekennzeichnet,**
**dass** der Käse (1) geraspelt wird.

4. Verfahren nach Anspruch 1,
**dadurch gekennzeichnet,**
**dass** die Raspel (1a) eine Länge von 5mm - 50 mm, eine Breite von 3 mm - 5 mm und eine Dicke von 1 mm - 3 mm und/oder feiner aufweisen.

5. Verfahren nach Anspruch1,
**dadurch gekennzeichnet,**
**dass** die Wasser-Käse Mischung (1,6) nach der Hochdruckbehandlung homogenisiert und anschließend gekühlt und gelagert wird.

6. Verfahren nach Anspruch 1,
**dadurch gekennzeichnet,**
**dass** als fester und/oder weicher Käse (1) gereifter Käse, insbesondere junger, mittelalter oder alter Käse, insbesondere Gouda, Butterkäse, Emmentaler, Edamer, Leerdamer, Tilsiter, Bergkäse, Chester (Cheddar), Milster Marschkäse, Steinbuscher Edelpilzkäse, Weisslacker, Camembert, Brie, Romadur, Limburger, Minsterkäse, Speisequark, Schichtkäse, Rahmfrischkäse und Doppelrahmfrischkäse, Harzer Käse, Mainzer Käse, Handkäse, Bauernhandkäse, Korbkäse, Stangenkäse, Spitzkäse, Eulmitzer Quargel, sowie Parmesan, Prevotta verwendet wird.

7. Verfahren nach Anspruch 1 und/oder wenigstens einem der folgenden,
**dadurch gekennzeichnet,**
**dass** als wässrige Komponenten (6) wässrige Lösungen, insbesondere bestehend aus demineraliserten und entmineraliserten Wasser, Bier, Saft, Trinkwasser, Obstsaft oder Gemüsesaft und Wein, sowie Emulsionen, insbesondere Molke, Joghurt, Sahne verwendet werden.

8. Verfahren nach Anspruch 1 und/oder wenigstens einem der folgenden,
**dadurch gekennzeichnet,**
**dass** die Wasser-Käse Mischung (1,6) einer Hochdruckbehandlung mit bis zu 3.900 bar (390 MPa) ausgesetzt wird.

9. Verfahren nach Anspruch 1 und/oder wenigstens einem der folgenden,
**dadurch gekennzeichnet,**
**dass** die Hochdruckbehandlung für eine Zeit von 1 Sekunde bis 24 Stunden erfolgt.

10. Verfahren nach Anspruch 1 und/oder wenigstens einem der folgenden,
**dadurch gekennzeichnet,**
**dass** die Lagertemperatur zwischen 1 °C und 20 °C beträgt.

11. Verfahren nach Anspruch 1 und/oder wenigstens einem der folgenden,
**dadurch gekennzeichnet,**
**dass** die Lagerdauer 30 Minuten bis 1 Jahr vorzugsweise mindestens 96 Stunden beträgt.

12. Verfahren nach Anspruch 1 und/oder wenigstens einem der folgenden,
**dadurch gekennzeichnet,**
**dass** der Wasser-Käse Mischung (1,6) vor und/oder nach der Hochdruckbehandlung trockene Zutaten wie Gewürze, Kräuter, und/oder Molkenpulver zugesetzt werden.

13. Flüssiger, streichfähiger oder schnittfähiger Käse,
**dadurch gekennzeichnet,**
**dass** dieser durch ein Verfahren gemäß Anspruch 1 und/oder wenigstens einen der folgenden erzeugt ist.
